# EUROPEAN PATENT APPLICATION

(11) **EP 1 767 865 A2**
(43) Date of publication of application: **28.03.2007**
(21) Application number: 06120249.5
(22) Date of filing: 07.09.2006
(51) Int. Cl.: F24C 15/02, F24C 7/08, A47J 37/06

(54) **Oven with an automatic door, for pizza, bread or pastry products**

(30) Priority: 23.09.2005 IT MI20050327 U
(71) Applicant: OEM - Ali S.p.A, 20123 Milan (IT)
(72) Inventor: BERTI, Luciano Achille Luigi, 20060, BUSSERO (Milan) (IT)
(74) Representative: De Gregori, Antonella

(57) **Abstract**

Oven for pizza, bread or pastry products with an automatic door comprising a general framework (11, 111, 211, 311), an internal baking chamber (12, 112, 212, 312) with a baking shelf (13, 113, 213, 313), a front opening (14, 114, 214, 314), at which a door (15, 115, 215, 315,) is arranged to open and close the oven, wherein there is foreseen a detector or sensor unit (21, 121, 221, 321) of an object or product (24, 25, 26) to be introduced or which has been introduced into the oven, placed at the front opening (14, 114, 214, 314), and operationally connected by means of a control unit (20,120, 220, 320) to at least one actuator (19, 119, 219, 319) for the tilting of the door (15, 115, 215, 315,) between a raised open position and a lowered closed position.

## Description

The present invention relates to an oven with an automatic door, for pizza, bread or pastry products.

In general, various types of oven have already been designed and put to use for the small and even industrial production of pizza, bread or pastry products, able to facilitate or improve oven use.

One particular element that is rather important in the use of an oven of the type described, is the actuation of the closing door during various oven usage steps.

In general, such as in current industrial ovens for baking pizza, for example, the baking chamber closing door must be opened and closed by hand each time the operator introduces, controls or removes the pizza or pizzas.

This means that the operator must be involved in opening and closing the door, and in any case, this also signifies that the door remains open for a certain time (with considerable heat loss).

The considerable periods of time that door remains open depend both on the direct intervention by the operator in manipulating the pizza and actuating the door at the same time. Furthermore, it must also be considered that in order to act more rapidly, the operator uses one hand to manipulate the product and the other to actuate the door, that involves the risk of the operator dropping the product, or that the door can close without warning, making the whole operation rather complicated.

In known oven, as far as the doors are concerned, certain problems connected with the structure are present, which is generally made of metal sheet profiles assembled and welded to contain two panes of glass. In fact these ovens require one pane of sintered glass and another of tempered glass forming a chamber of a certain thickness with increasing weight of the door.

Thus, in general various systems are applied to cooperate in opening the door, such as counter weights, springs, or handles of considerable size. All of these systems result in a general increase in the size of the total oven structure with the consequential increase in production, assembly and maintenance cost.

The general aim of the present invention is to realize an oven for pizza, bread or pastry products with an automatic door able to eliminate the problems described above.

A further aim of the present invention is to provide a door opening system that frees the user from any type of manual intervention.

Yet another aim of the present invention is to minimize the loss of heat from the oven each time the door is opened.

A further aim of the present invention is to be able to minimize the space occupied by opening the oven door as well as the door structure, by simplifying the construction.

These aims according to the present invention are achieved by realizing an oven for pizza, bread or pastry products provided with an automatic door as set forth in claim 1.

The other claims define all additional characteristics of the present invention.

The characteristics and advantages of an oven for pizza, bread and pastry products equipped with an automatic door according to the present invention will be made clearer from the following description provided as an example but by no means limiting, with reference to the appended schematic drawings wherein:
Figures 1 and 2 show a side elevation view, partially in section, and a front view of a first example of an oven according to the present invention provided with an automatic door;
Figures 3 and 4 also show a side elevation view, partially in section, and a front view of a second example of an oven according to the present invention;
Figures 5 and 6 also show a side elevation view, partially in section, and a front view of a third example of a part of an oven according to the present invention;
Figures 7 and 8 also show views of a side elevation view, partially in section, and a front view of a fourth embodiment of a part of an oven according to the present invention.

With reference to the figures, in general there is shown an oven for pizza, bread or pastry products that includes an automatic door according to the innovative concept of the present invention.

Each oven example, shown partially in a basic framework thereof at 11, foresees a closed baking chamber 12 containing a baking shelf 13. The oven has a front opening 14 at which a door for opening and closing said oven is provided, indicated throughout by the numeral 15 without reference to its construction and operating function.

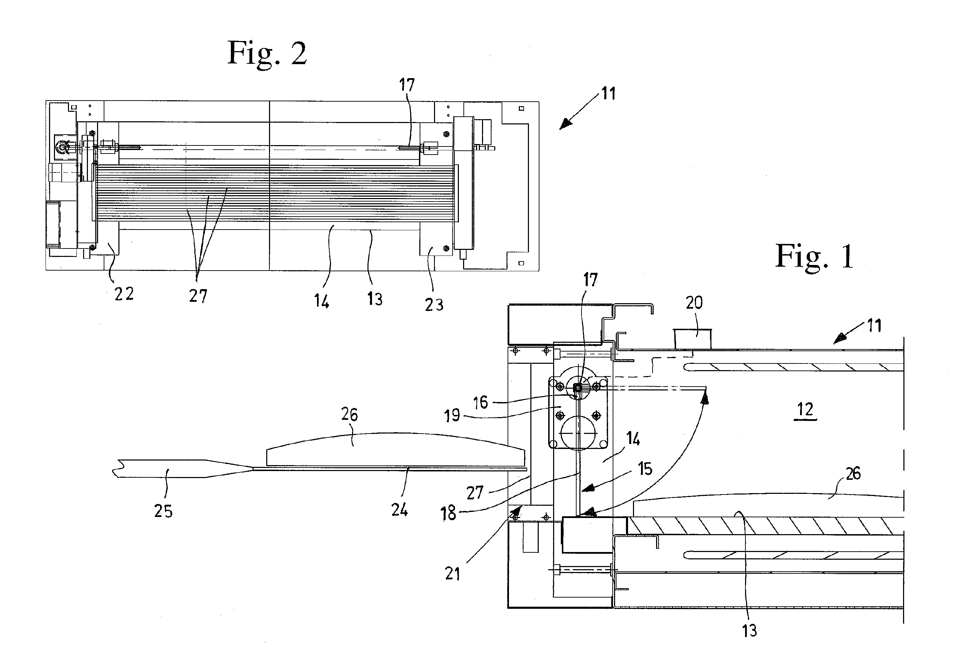

In the example shown in figures 1 and 2, such door 15 comprises a support profile 16 arranged in the upper position in the example, that terminates at its opposed ends with pivot pins 17 and which retains and supports a sintered glass panel 18, for example appropriately processed. A reduction unit or gear motor 19 controls the oscillating rotation of pivot pins 17, and consequently the rotation of the door 15 as a whole, when it is activated by a control unit shown schematically by numeral 20, connected to a sensor or detector unit 21, located at the opening 14 of the entry to the baking chamber 12.

In the example of figures 1 and 2 the sensor or detector unit 21 comprises a transmitter 22 and a receiver 23. The transmitter 22 and the receiver 23 are positioned in separate cases opposite each other and located vertically on the sides of the entrance to the opening 14 facing the baking chamber 12, within the general framework 11. Furthermore, the transmitter 22 and receiver 23 are positioned at such an appropriate distance facing the exterior to avoid being subject to temperature peaks from the oven.

This creates a photoelectric barrier that generates a dense screen of light beams 27, in the example shown in a fan-shaped emission, which performs a scanning of the area in several directions. In this manner, even the interruption of one single light beam will trigger the gear motor 19 to open the door 15, as shown by the dotted lines in figure 1.

It is obvious that according to the present invention said barrier, or the detector unit 21 must detect some object especially in two specific positions. This means, a first position where the operator introduces an oven product 26 in the oven using a spatula 24, and a second position wherein the spatula is in the oven, and therefore a handle 25 of the spatula 24 has to be detected even though it is small in size.

The operating system is easy to understand: when the operator tries to introduce a product by means of the spatula 24 or some other support, into the oven, the light beams are immediately interrupted and activate the control unit 20 of the gear motor 19 which opens the door 15. This moves the door 15 to a position parallel with the internal ceiling of the oven, as shown by the dotted lines in figure 1. The door 15 remains in this position until the spatula or some other support is extracted from the oven removing the obstacle from the light beams 27 and thus activating the gear motor 19 to perform the reverse movement. This leads to the lowering of the door to close the opening 14 at the entrance to the baking chamber 12.

Figure 1 shows how the door 15 oscillates towards the interior of the oven, occupying a minimum of space and permitting the opening action at the very last moment when the spatula 24, or the oven product 26 is being introduced into the oven. It is calculated that the response time can be approximately 5 milliseconds. The automation on the door contributes towards considerable energy saving, as well as work continuity by the operator both at the inlet and at the outlet of the oven, leaving both hands free from having to control the oven door.

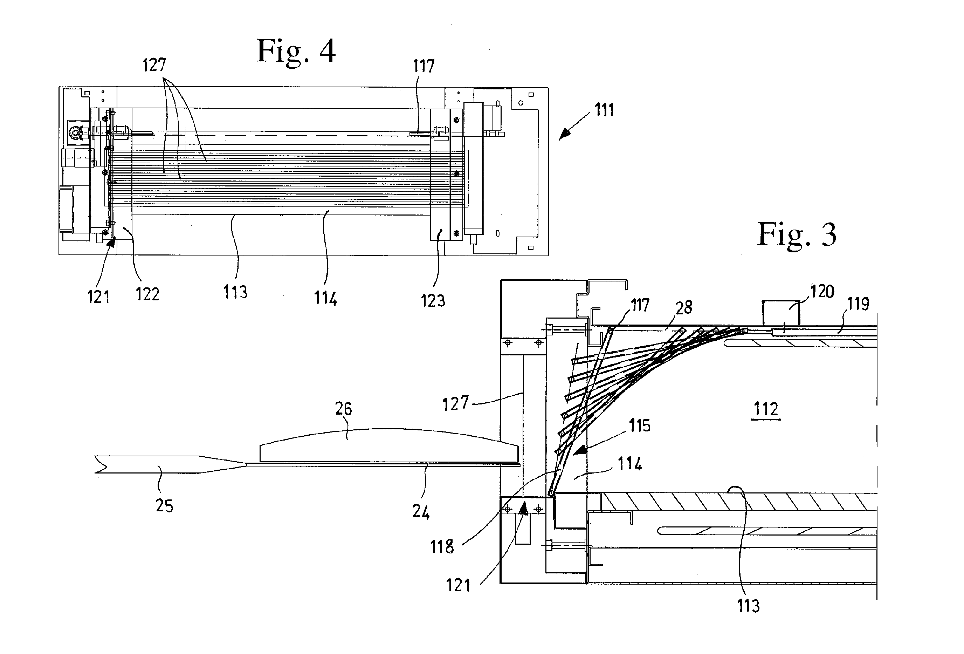

Figures 3 and 4 show a second example of the oven according to the invention wherein similar elements are identified by the same reference numerals as the previous example, but preceded by the numeral "1". A detector or sensor unit 121 is also positioned vertically on the sides of an opening 114 at the entrance to the baking chamber 112.

However the door 115 is manufactured and positioned in a different manner, wherein the upper pivot pins 117 slide inside guides 28 set in upper portions of internal walls of the baking chamber 112. The control to such movement is conferred by actuators such as cylinders 119, that command a lever system (not shown) that not only provokes the reentry of the door, but also its tipping back and rise until it is alongside the upper internal wall of the oven.

In both examples shown of figures 1, 2, and 3, 4, door 15 and door 115 reenter almost totally inside the oven occupying a minimum of space.

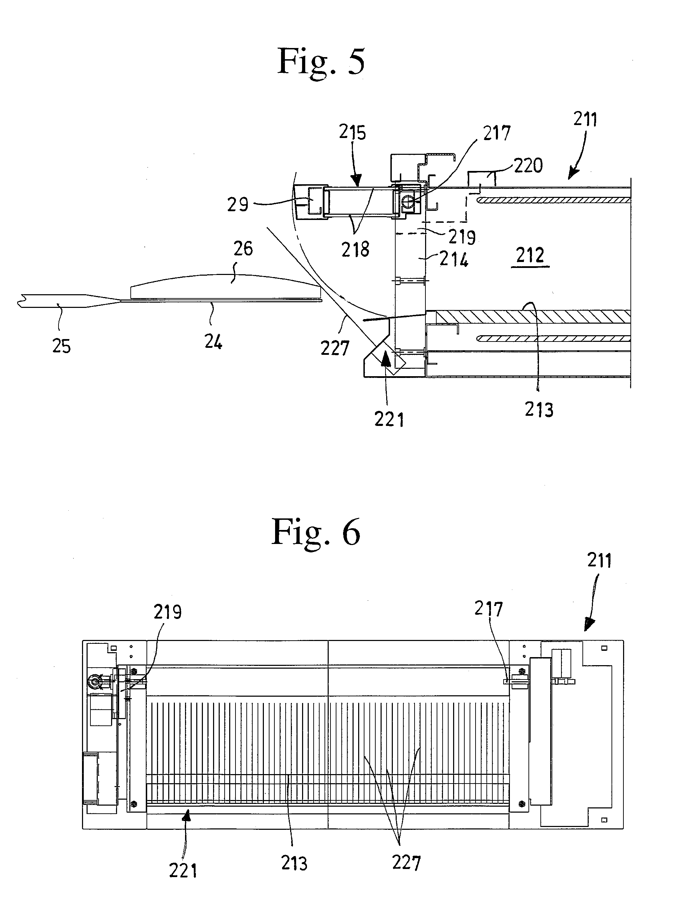

Figures 5 and 6 show a third example of an oven according to the invention wherein an alternative arrangement of the detector or sensor unit and the door itself is proposed. Similar elements are identified by the same reference numerals as the previous example, but preceded by the numeral "2".

The door 215 is manufactured in a box-like structure 29 having a pair of glass panes 218, and is constrained by upper pivot pins 217 to the general framework 211 of the oven. In this case as well, an actuator 219, such as a gear motor or some other control element, commands the oscillation rotation of the pivot pins 217.

In the present example because of the space occupied by the door 215, the door itself 215 tilts towards the exterior until it moves outside the chamber 212 placing itself parallel and in line with the upper wall of the oven. The sensor or detector unit 221 comprising a transmitter-receiver is positioned in a lower horizontal zone of the general framework 211 of the oven. The sensor unit 221 is located at an appropriate distance facing towards the exterior to avoid being subject to temperature peaks emitted by the oven and it transmits light beams 227 for direct reading which are on a slant in relation to the baking shelf 213, in a manner so that they do not interfere with the opening-closing path of the door 215.

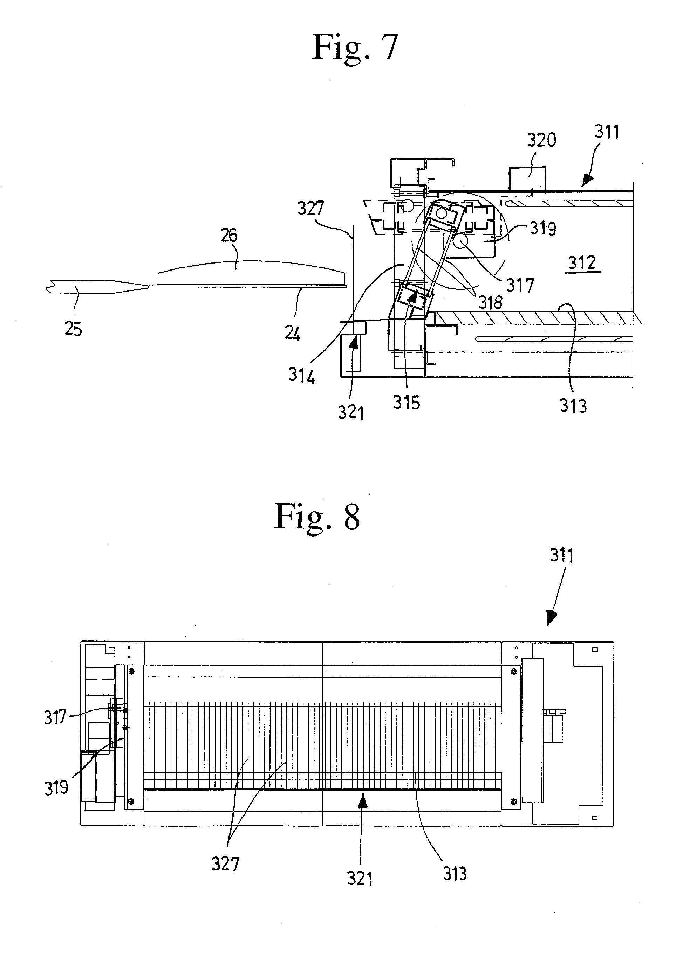

Figures 7 and 8 show a further example similar to the previous model, where it has been attempted to minimise the space occupied by the door during rotation. In fact the door 315 has pivot pins 317 positioned in an intermediate zone of the internal wall thereof. In this manner, when the door 315 tilts until it is almost parallel with the internal wall (figure 7 dotted lines) the door 315 also reenters the baking chamber 312 of the oven at the same time.

Consequently the sensor unit 321, still positioned in a lower horizontal area of the general framework 311 of the oven, sends direct reading light beams which are normal to the baking shelf 313, in a manner so that they do not interfere with the opening-closing path of the door 315.

The opening of the door is slower than the previous example.

Thus, it has been seen the innovative arrangement according to the present invention.

The oven according to the invention is able to minimise the period of time the door remains open thus reducing energy loss.

Above all, it eliminates all human intervention for opening and closing the door, action which is performed simply by the introduction and/or removal of the product or only of the support on which it is placed.

The particular location of the sensor unit at the sides of the opening also permits the possibility of placing several ovens on top of one another without the sensor units of the various ovens becoming disturbed by above or below in-oven operations.

If necessary, manual side actuators can be provided for use in the case of a fault in the automatic actuators of the door and/or sensor units.

An oven for pizza, bread or pastry products which provides an automatic door conceived in this manner may be subject to numerous modifications and variants while remaining within the context of the present invention; furthermore all the components can be replaced by other elements that are technically equivalent. In practice, the materials and size can be of any type according to technical needs.

## Claims

1. Oven for pizza, bread or pastry products with an automatic door comprising a general framework (11, 111, 211, 311), an internal baking chamber (12, 112, 212, 312) with a baking shelf (13, 113, 213, 313), a front opening (14, 114, 214, 314), at which a door is arranged (15, 115, 215, 315,) to open and close the oven, **characterised in that** it includes a detector or sensor unit (21, 121, 221, 321), of an object or product (24, 25, 26) to be introduced or which has been introduced into the oven, placed at the front opening (14, 114, 214, 314), and operationally connected by means of a control unit (20, 120, 220, 320) to at least one actuator (19, 119, 219, 319) for the tilting of the door (15, 115, 215, 315,) between a raised open position and a lowered closed position.

2. Oven according to claim 1 **characterised in that** said detector or sensor unit (21, 121, 221, 321) comprises at least one transmitter (22) and at least one receiver (23) of a screen of light beams (27,127,227,327).

3. Oven according to claim 2 **characterised in that** said at least one transmitter (22) and said at least one receiver (23) are positioned opposite each other at the sides of the entrance to the opening (14, 114, 214, 314) of the oven.

4. Oven according to claim 2 **characterised in that** said at least one transmitter (22) and at least one receiver (23) are positioned opposite each other on the vertical sides of the entrance to the opening (14,114, 214, 314) of the oven.

5. Oven according to claim 2 **characterised in that** said at least one transmitter (22) and at least one receiver (23) are positioned at a certain distance facing the exterior to avoid being subject to temperature peaks emitted by the oven.

6. Oven according to claim 1 **characterised in that** said detector or sensor unit (221, 321) comprises at least one transmitter (222, 322) and at least one receiver (223, 323) positioned at a level lower than said opening (214, 314) of the oven to transmit a direct reading screen of light beams (227, 327).

7. Oven according to claim 6 **characterised in that** said direct reading screen of light beams (227) is slanted in relation to a baking shelf (213) of the oven.

8. Oven according to claim 1 **characterised in that** said door (15) comprises a support profile (16) which terminates at opposite ends thereof with pivot pins (17), and that retains and supports a sintered glass pane (18), said pivot pins (17) being operationally connected to said actuator (19).

9. Oven according to claim 1 **characterised in that** said door (115) comprises upper pivot pins (117), that slide in guides (28) set in upper portions of internal walls of said baking chamber (112), said pivot pins (117) being operationally connected to said actuator (119).
